Europäisches Patentamt

European Patent Office

Office européen des brevets

(19)

(11) Numéro de publication: **0 009 096**
**B1**

(12) **FASCICULE DE BREVET EUROPEEN**

(45) Date de publication du fascicule du brevet: **09.02.83**

(51) Int. Cl.³: **H 04 B 7/185**

(21) Numéro de dépôt: **79102640.4**

(22) Date de dépôt: **25.07.79**

(54) Procédé et système de synchronisation d'un réseau de communication à accès multiple par répartition dans le temps et utilisant un satellite ayant plusieurs antennes à faisceau directif sur des fréquences différentes.

(30) Priorité: **15.09.78 FR 7827024**

(43) Date de publication de la demande:
**02.04.80 Bulletin 80/7**

(45) Mention de la délivrance du brevet:
**09.02.83 Bulletin 83/6**

(84) Etats contractants désignés:
**DE FR GB**

(56) Documents cités:
**FR - A - 2 329 116**
**US - A - 3 562 432**
**US - A - 3 710 255**
**US - A - 4 004 225**

**IEEE ICC INTERNATIONAL CONFERENCE ON COMMUNICATIONS, 11—13 juin 1973, Seattle, IEEE, New York USA W. G. SCHMIDT et al.: "A Satellite Switched SDMA/TDMA System For a Wideband Multibeam Satellite", pages 12—7 — 12—12.**

(73) Titulaire: **International Business Machines Corporation**
**Armonk, N.Y. 10504 (US)**

(72) Inventeur: **Lautier, Alex**
**RB 1-93 avenue de la Lanterne**
**F-06200 - Nice (FR)**
Inventeur: **Monrolin, Jean-Louis**
**Le Roc du Trigan**
**F-06610 - La Gaude (FR)**

(74) Mandataire: **de Pena, Alain**
**COMPAGNIE IBM FRANCE Departement de Propriété Industrielle**
**F-06610 La Gaude (FR)**

Courier Press, Leamington Spa, England.

## Procédé et système de synchronisation d'un réseau de communication à accès multiple par répartition dans le temps et utilisant un satellite ayant plusieurs antennes à faisceau directif sur des fréquences différentes

### Domaine technique

La présente invention concerne les systèmes de synchronisation des réseaux de communication par satellite, et plus particulièrement un procédé et un système pour synchroniser un réseau utilisant un satellite ayant plusieurs antennes d'émission à faisceau directif sur des fréquences différentes et utilisant un procédé d'accès multiple par répartition dans le temps (AMRT).

### Etat de la technique antérieure

La technique d'accès multiple par répartition dans le temps est une technique bien connue selon laquelle plusieurs stations terrestres partagent un répéteur de satellite commun en émettant des paquets d'impulsions qui arrivent séquentiellement au répéteur et sont retransmis par celui-ci vers les stations. Le temps est découpé en trames récurrentes, chacune d'elles comprenant plusieurs intervalles de temps et chacun d'eux est alloué à une station donnée. Pendant l'intervalle de temps qui lui est alloué une station émet un paquet d'impulsions vers le satellite qui le retransmet vers la ou les stations destinatrices. Les paquets d'impulsions émis par les diverses stations doivent se présenter au niveau du répéteur de satellite à des instants précis pour qu'ils ne se chevauchent pas dans le temps et puissent être retransmis en série par le répéteur de satellite. Il est donc essentiel que les paquets émis par les diverses stations soient synchronisés entre eux de façon à ce qu'ils soient émis à des instants précis, ce qui évite la "collision" des différents paquets d'impulsions au niveau du répéteur de satellite.

Dans les réseaux AMRT utilisant un satellite ayant une antenne d'émission à faisceau global qui assure les liaisons descendantes, la synchronisation des stations du réseau est généralement obtenue par la technique dite en boucle unique qui est la suivante. Une station particulière, qui est désignée comme station de référence émet un paquet d'impulsions de référence qui est retransmis par le répéteur de satellite et reçu par toutes les stations du réseau. Chaque station ajuste l'instant d'émission de son paquet d'impulsions en fonction de la durée entre l'instant où elle reçoit le paquet d'impulsions de référence et l'instant où elle reçoit son propre mot de référence qu'elle a elle même émis et qui lui est retransmis par le satellite. La technique de synchronisation en boucle unique a été largement décrite dans la littérature et on pourra se référer, par exemple, à l'article de H. Gänssmantel et B. Ekström, "TDMA Synchronization for Future Multitransponder Satellite Communication" International Conference on Communications, Minneapolis, June 17—19, 1974.

La synchronisation en boucle unique n'est possible dans les réseaux AMRT que pour les stations situées dans la zone géographique où sont retransmis leurs propres paquets d'impulsions. C'est le cas des réseaux AMRT utilisant un satellite ayant une antenne d'émission à faisceau global qui assure les liaisons descendantes. Actuellement on s'oriente de plus en plus vers l'utilisation de satellites ayant des antennes d'émission à faisceaux fins directifs pour assurer les liaisons descendantes. L'utilisation de faisceaux directifs fournit un bilan de liaison plus avantageux que celui fourni par l'utilisation d'un faisceau global et est facilitée ajourd'hui par la précision accrue de la stabilisation des satellites. Dans les réseaux utilisant un satellite ayant des antennes à faisceau directif sur des fréquences différentes les stations ne peuvent recevoir les paquets d'impulsions qu'elles ont elles-mêmes émises et il n'est donc pas possible de synchroniser le réseau avec la technique de synchronisation en boucle unique.

Pour synchroniser un réseau AMRT utilisant un satellite ayant des antennes à faisceau directif sur des fréquences différentes on a vu se développer la technique d'accès multiple à répartition dans l'espace/accès multiple par répartition dans le temps commuté dans le vaisseau spatial (connu dans la littérature anglo-saxonne sous le sigle SDMA/SS—TDMA). Selon cette technique la synchronisation des stations est obtenue à l'aide d'une référence de temps absolue fournie par le satellite. On se référera pour plus de détails par exemple à l'article de M. Asahara et autres "Synchronization and Acquisition in SDMA Satellite Communication System", International Conference on Communications, Minneapolis, June 17—19, 1974. La technique SDMA/SS—TDMA exige bien sûr un équipement très coûteux dans le satellite.

Une autre technique pour synchroniser un réseau AMRT utilisant un satellite ayant des antennes à faisceau directif sur des fréquences différentes est décrite dans le brevet français No. 72 46741 publié sous le No. 2 169 047. Selon la technique décrite dans ce brevet, le satellite qui comprend les différentes antennes d'émission à faisceau directif assurant les liaisons entre les différentes stations, comprend en outre une antenne d'émission à faisceau global qui couvre toutes les stations et permet l'utilisation de la technique de synchronisation en boucle unique. Le système de synchronisation décrit dans ce brevet exige bien sûr une duplication des installations à bord du satellite et en accroît le coût le poids.

### Exposé de l'invention

Un premier objet de l'invention est de fournir un procédé et un système pour synchroniser un réseau AMRT utilisant un satellite ayant plusieurs antennes d'émission à faisceau directif sur des fréquences différentes, qui ne nécessitent aucun équipement supplémentaire à bord du satellite.

Un autre objet de l'invention est de fournir un procédé et un système pour synchroniser un réseau AMRT utilisant un satellite ayant plusieurs antennes d'émission à faisceau directif sur des fréquences différentes, qui ne nécessitent pas l'utilisation d'une station de référence.

D'une manière générale l'invention propose un procédé et un système pour synchroniser dans une trame récurrente les débuts d'émission des stations dans un réseau AMRT dans lequel N stations réparties en M zones distinctes couvertes par M fréquences descendantes différentes échangent à travers un satellite des paquets d'impulsions, chacun d'eux comprenant en préambule, un mot unique, l'addresse de la station émettrice et des données de trafic. Le satellite comprend une antenne de réception à faisceau global qui couvre l'ensemble des M zones et qui est adaptée pour recevoir M fréquences montantes différentes, des moyens pour transformer respectivement les M fréquences montantes en M fréquences descendantes différentes correspondantes, et M antennes d'émission à faisceau directif qui couvrent respectivement les M zones, chacune de ces M antennes étant adaptée pour émettre la fréquence descendante qui est associée à la zone qu'elle couvre.

Selon le procédé de l'invention les paquets émis par les stations occupent une position prédéterminée dans la trame. Chaque station détecte si elle reçoit un mot unique suivi d'une adresse de station. Lorsque la station détecte une telle adresse, elle initie des moyens de temporisation qui définissent un intervalle de temps associé à la station dont l'adresse a été détectée et à la fin duquel prend place le début d'émission de la station. La station émet alors successivement M paquets à destination respective des M zones pendant des intervalles de temps prédéterminées dans la trame. Ces M paquets sont émis sur des fréquences montantes différentes de telle sorte que le paquet à destination d'une zone donnée soit émis sur la fréquence montante qui correspond à la fréquence descendante à destination de cette zone.

Selon un mode de réalisation de l'invention, les moyens de temporisation comprennent N temporisateurs qui définissent respectivement N intervalles de temps associés aux N stations. Le début d'émission de la station est déterminé par le temporisateur qui atteint le premier la fin de son intervalle de temps.

Selon un autre mode de réalisation de l'invention, N' étant le plus grand nombre de stations dans une zone, la trame est divisée en N' intervalles de temps égaux et, au plus M stations, au plus une station par zone, émettent simultanément pendant un de ces intervalles de temps, les autres stations restant silencieuses.

Brève description des figures

D'autres objets, caractéristiques et avantages de la présente invention ressortiront mieux de l'exposé qui suit, fait en référence aux dessins annexés à ce texte, qui représentent un mode de réalisation préféré de celle-ci.

La figure 1 représente un exemple de configuration de réseau utilisant l'invention.

La figure 2 illustre schématiquement le satellite S de la figure 1.

La figure 3 représente schématiquement une station au sol du réseau.

La figure 4 illustre un exemple de composition de la trame utilisée dans l'invention.

Les figures 5 et 6 illustrent respectivement la composition d'une paquet double et d'un paquet simple.

La figure 7 est un schéma qui illustre comment est déterminé l'instant de début d'émission.

La figure 8 est un schéma bloc du multiplexeur 22 de la figure 3.

La figure 9 illustre en détail le dispositif de reconnaissance de mot unique et d'adresse de la figure 8.

La figure 10 est un diagramme des temps d'émission.

La figure 11 illustre un exemple de composition de trame dans le cas d'un réseau de six stations réparties en deux zones.

La figure 12 illustre un exemple de composition de trame dans le cas d'un réseau de six stations réparties en trois zones.

Description détaillée d'un mode de
réalisation de l'invention

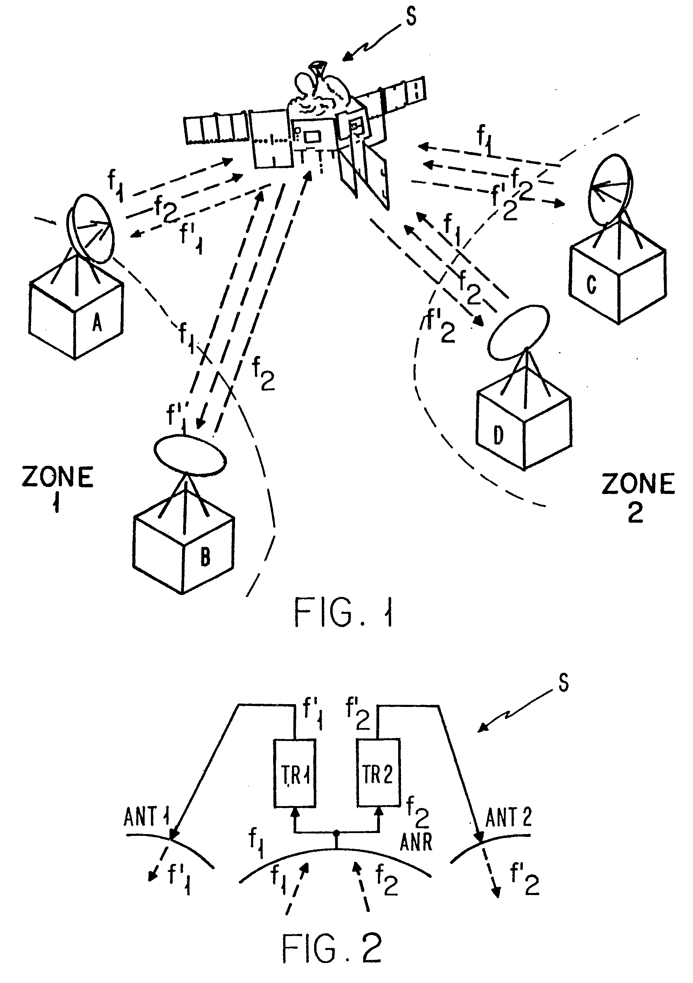

On a représenté sur la figure 1 un exemple de configuration du réseau utilisant l'invention. Le réseau comprend un satellite S et plusieurs stations terres-tres dont seulement quatre, référencées A, B, C et D ont été représentées sur la figure. Le satellite S (voir détails sur la figure 2), par exemple le satellite Symphonie, a une antenne de réception ANR à faisceau global qui assure la liaison montante pour l'ensemble des stations du réseau et deux antennes d'émission ANT1 et ANT2 à faisceau directif qui assurent respectivement deux liaisons descendantes vers deux zones géographiques distinctes. L'antenne à faisceau directif ANT1 couvre une première zone référencée ZONE 1, qui peut être par exemple la côte est des Etats-Unis d'Amérique et dans laquelle sont situées les stations A et B. L'antenne à faisceau directif ANT2 couvre une seconde zone, référencée ZONE 2, qui peut être l'Europe, et dans laquelle sont situées les stations C et D. Les antennes ANT 1 et ANT 2 sont associées respectivement à deux répéteurs TR1 et TR2. Le répéteur TR1 transforme une fréquence montante $f_1$ en une fréquence descendante $f_1'$ qui est émise vers la ZONE 1 par l'antenne ANT 1 et le répéteur TR2 transforme une fréquence montante $f_2$ en une frequence descendante $f_2'$ qui est émise vers la ZONE 2 par l'antenne ANT 2. L'antenne à faisceau global ANR peut recevoir les deux fréquences montantes $f_1$ et $f_2$.

Pour interconnecter les quatre stations du réseau, chacune d'elle doit fournir un accès montant à chacun des deux répéteurs de satellite. Chacune des stations transmet sur les deux fréquences montantes $f_1$ et $f_2$. Les stations de la ZONE 1 transmettent sur la fréquence montante $f_1$ pour communiquer entre elles et sur la fréquence montante $f_2$ pour communiquer avec les stations de la ZONE 2. Les stations de la ZONE 2 transmettent sur la fréquence montante $f_2$ pour communiquer entre elles et sur la fréquence montante $f_1$ pour communiquer avec les stations de la ZONE 1.

Par la suite on supposera que les différentes zones sont couvertes par des fréquences différentes. L'homme de l'art comprendra que l'invention n'est pas limitée à un réseau utilisant un satellite ayant uniquement des antennes d'émission à faisceau directif sur des fréquences différentes mais que le satellite peut avoir des antennes d'émission à faisceau directif additionnelles couvrant des zones distinctes sur les mêmes fréquences descendantes. Dans ce cas on considérara que des zones couvertes par la même fréquence descendante constituent une seule zone au sens de l'invention.

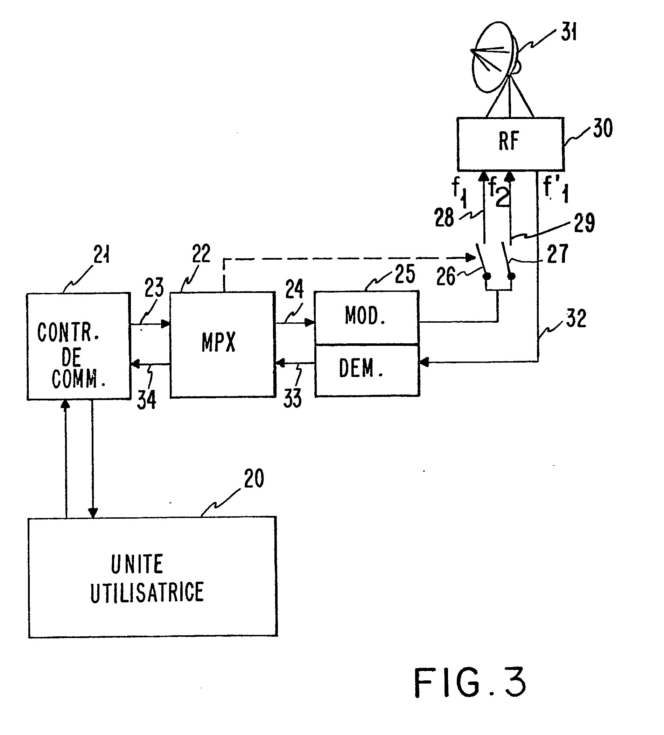

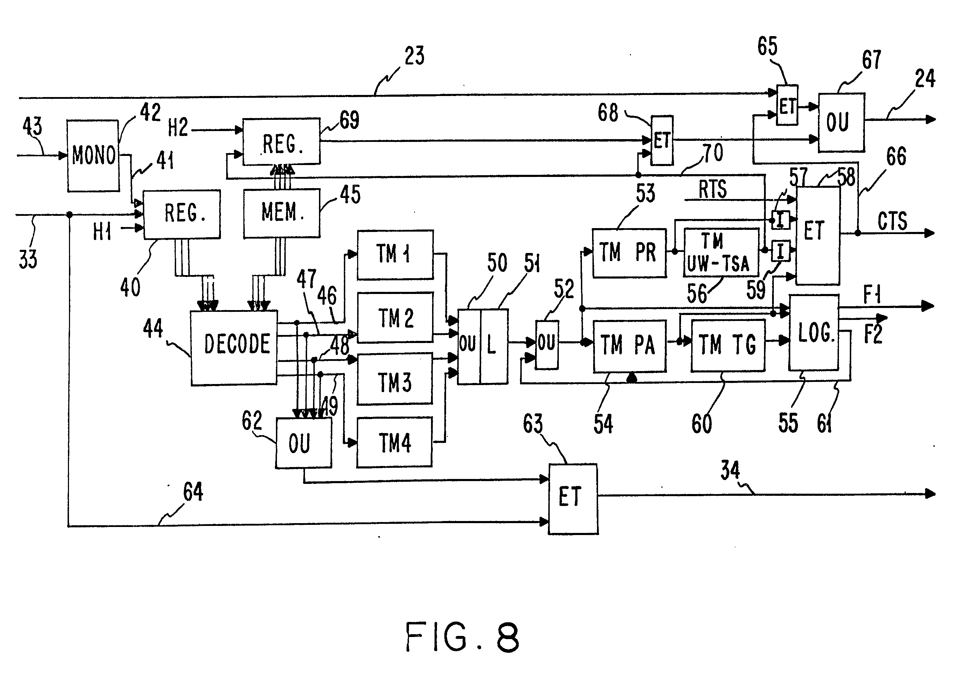

On se reportera maintenant.à la figure 3 sur laquelle on a illustré un exemple de sation terrestre du réseau de la figure 1 incluant l'invention. La station comprent une unité utilisatrice 20, par exemple un calculateur, qui est reliée à une contrôleur de communication 21 qui peut être par exemple le contrôleur de communication IBM 2701. Le contrôleur est relié à un multiplexeur de réseau 22 conforme à l'invention et qui sera décrit en détail en référence à la figure 8. Le multiplexeur de réseau 22 synchronise l'émission des paquets de données qui lui sont fournis par le contrôleur 21 sur une ligne 23 à l'intérieur d' intervalles de temps prédéterminés afin d'obtenir une utilisation maximum des répéteurs de satellite sand qu'il y ait d'interférence mutuelle entre les stations. Les paquets de données fournis par le multiplexeur de réseau 22 sont appliqués par une ligne 24 au modulateur MOD d'un modem 25. La sortie du modulateur MOD est appliquée en parallèle à une première borne de deux interrupteurs 26 et 27 dont les secondes bornes sont reliées respectivement à deux entrées 28 et 29 de l'équipment hautes fréquences 30 de la station. La fermeture et l'ouverture des interrupteurs 26 et 27 sont commandées par le multiplexeur de réseau 22. Lorsque les paquets doivent être transmis sur la fréquence montante $f_1$, les interrupteurs 26 et 27 sont respectivement fermé et ouvert, et la sortie du modulateur MOD est appliquée à l'entrée 28 de l'équipement 30 d'où elle est transmise sur la fréquence $f_1$ par l'antenne 31. Lorsque les paquets doivent être transmis sur la fréquence montante $f_2$, les interrupteurs 26 et 27 sont respectivement ouvert et fermé, et la sortie du modulateur MOD est appliquée à l'entrée 29 de l'équipement 30 d'où elle est transmise sur la fréquence montante $f_2$ par l'antenne 31. Les signaux reçus du satellite par l'antenne 31 traversent l'équipement 30 et sont appliqués par la ligne 32 à l'entrée du démodulateur DEM du modem 25. Les signaux de sortie du démodulateur DEM sont appliqués par une ligne 33 à l'entrée du multiplexeur du réseau 22 qui les transfère sélectivement au contrôleur 21 par une ligne 34.

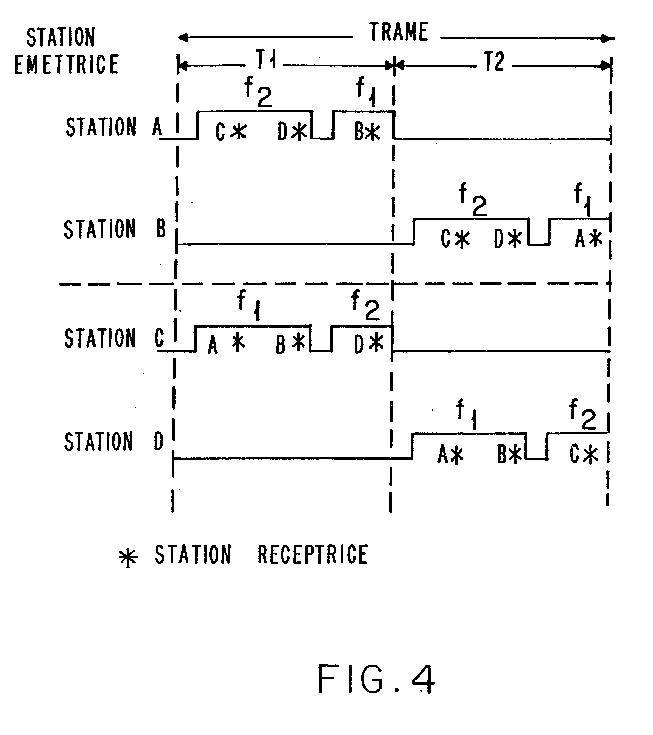

On décrira maintenant en détail le procédé de l'invention en se référant à la figure 4. Le multiplexeur de réseau 22 commande le début d'émission de la station qui le comprend de telle sorte que les paquets transmis par les stations soient synchronisés à l'intérieur d'une trame d'émission. On a représenté sur la figure 4 la position relative des différents paquets dans une trame. Dans un mode de réalisation préféré de l'invention, la trame est divisée en deux moitiés, la première moitié étant référencée T1 et la seconde moitié T2. Pendant la première moitié de trame T1, deux stations dans des zones séparées, par exemple la station A dans la ZONE 1 et la station C dans la ZONE 2 transmettent simultanément des paquets de durée fixe pendant que les deux autres stations sont silencieuses. La station A attend pendant un temps de garde entre paquets, émet un paquet double à destination des stations C et D sur la fréquence montante $f_2$, attend pendant un temps de garde entre paquets, puis émet un paquet simple à destination de la station B sur la fréquence montante $f_1$. Toujours pendant la première moitié de trame T1, en synchronisme, la station C attend pendant un temps de·garde entre paquets, émet un paquet double à destination des stations A et B sur la fréquence montante $f_1$, attend pendant un temps de garde entre paquets, puis émet un paquet simple à destination de la station D sur la fréquence montante $f_2$. Pendant la seconde moitié de trame T2, ce sont les deux autres stations, les stations B et D, qui transmettent simultanément des paquets de durée fixe de façon semblable à celle utilisée par les stations A et C pendant la première moitié de trame T1.

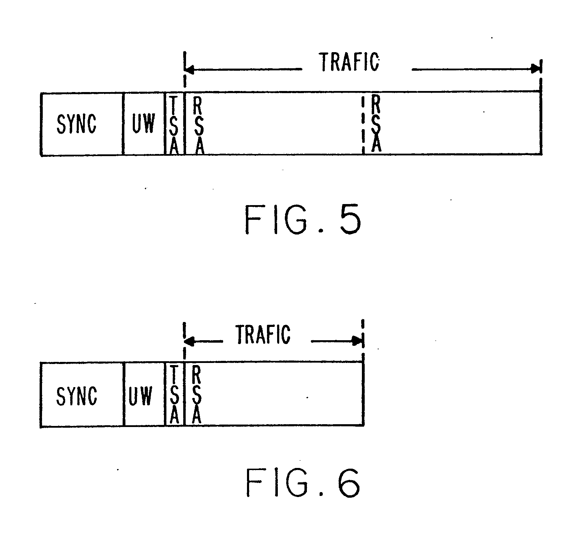

On a représenté sur la figure 5 la composition d'un paquet double. Le paquet double commence par un préambule référencé SYNC pout l'acquisition et la synchronisation du modem. Le préambule SYNC est suivi par un mot de synchronisation connu sous la désignation de "mot unique" UW. Les préambules SYNC et les mots uniques sont bien connus dans l'art. Le mot unique UW est suivi par l'adresse de la station émettrice (TSA). L'adresse TSA est suivie par les données de trafic qui comprennent l'adresse de la première station destinatrice (RSA) suivie des données qui lui sont destinées, et l'adresse de la seconde station destinatrice suivie des données qui lui sont destinées.

La figure 6 illustre la composition d'un paquet simple. Il comprend un préamuble SYNC d'acquisition et de synchronisation de modem, un mot unique UW, l'adresse de la station émettrice TSA, el les données de trafic. Les données de trafic comprennent l'adresse de la station destinatrice (RSA) suivie des données qui lui sont destinées.

On notera que le mot unique est le même pour l'ensemble des stations du réseau.

On décrira maintenant le procédé de synchronisation qui permet à une station de déterminer l'instant où elle doit émettre ses paquets. Dans une trame chaque station émet ses paquets pendant des intervalles de temps prédéterminées. Comme on l'a vu plus haut, chaque paquet comprend un mot unique suivi par l'adresse de la station émettrice. Une station, par exemple la station D, détecte un mot unique UW puis décode l'adresse de la station émettrice qui suit ce mot unique, par exemple l'adresse de la station A, et initie un temporisateur associé à la station A. Ce temporisateur définit l'intervalle de temps approprié $T_A$ qui doit s'écouler entre l'instant de réception de l'adresse de la station A et l'instant où la station D doit commencer l'émission de ses paquets suivants.

En fonctionnement normal, si toutes les stations émettent, quatre mots uniques UW et quatre adresses sont reçus pendant la durée d'une trame. Dans un mode de réalisation préféré, chaque station est équipée avec quatre temporisateurs associés respectivement avec les quatre stations du réseau. De façon idéale, les quatre temporisateurs devraient fournir le même instant de début d'émission. Mais, en raison des temps de propagation variables et de l'imprécision des temporisateurs, les instants de début d'émission déterminées par les quatre temporisateurs peuvent ne pas coïncider. Selon un mode de réalisation de l'invention l'instant d'émission des paquets est déterminé par le premier temporisateur qui atteint la fin de son intervalle de temps.

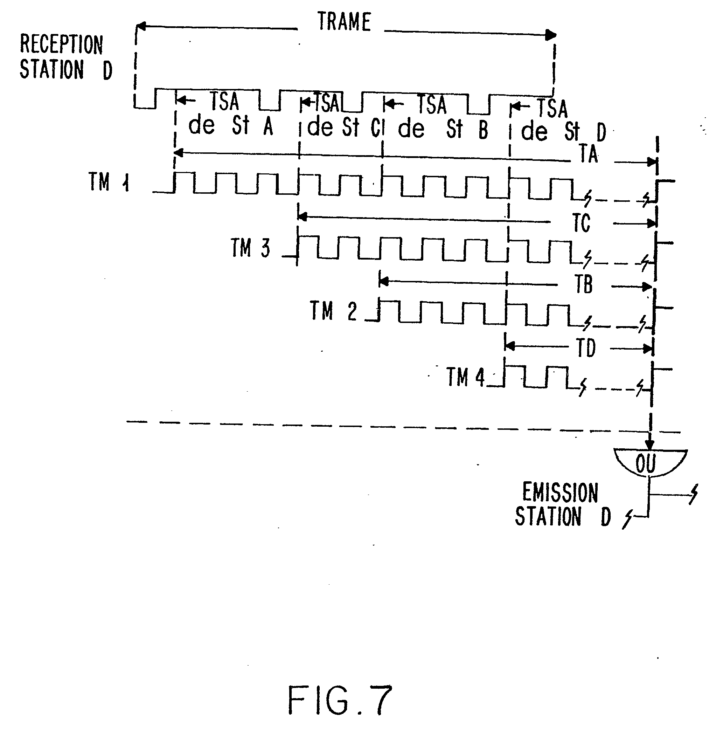

On décrira maintenant en détail le procédé de synchronisation ci-dessus en se référant à la figure 4 et à la figure 7 sur laquelle on a représenté un schéma aidant à la compréhension du procédé de l'invention. La figure 7 illustre la séquence des paquets reçus par la station D pendant la durée de la trame illustrée sur la figure 4. La station D qui est située dans la ZONE 2 reçoit seulement les paquets qui sont retransmis par le satellite sur la fréquence descendante $f_2'$, c'est-à-dire les paquets émis vers le satellite sur la fréquence montante $f_2$. Ainsi la station D reçoit tout d'abord le paquet double émis par la station A. La station D détecte le mot unique UW contenu dans le paquet et décode l'adresse de la station A qui suit ce mot. La détection de l'adresse de la station A initie un premier temporisateur TM1 qui définit l'intervalle de temps TA qui sépare la détection de l'adresse de la station A de l'instant de début d'émission de la station D. La station D reçoit ensuite le paquet simple émis par la station C. Le décodage de l'adresse de la station C initie un second temporisateur TM3 qui définit un intervalle de temps TC qui est différent de l'intervalle de temps TA mais qui doit fournir un instant de début d'émission sensiblement coïncident avec celui fourni par le temporisateur TM1. La station D reçoit ensuite le paquet double émis par la station B et initie un temporisateur TM2 associé à la station B. Enfin, la station D reçoit le paquet simple émis par elle-même et initie un temporisateur TM4 associé à la station D. L'instant de début d'émission de la station D est simplement obtenu en faisant la fonction OU de la sortie des quatre temporisateurs TM1—TM4.

On notera que ce procédé maintient la synchronisation du réseau même si une ou plusieurs stations stoppent leurs opérations. S'il ne reste qu'une seule station, celle-ci commencera ses émissions sur la détection de sa propre adresse. Le réseau est aussi auto-synchronisé puisqu'une nouvelle station prête à émettre se synchronise sur les autres stations en fonctionnement.

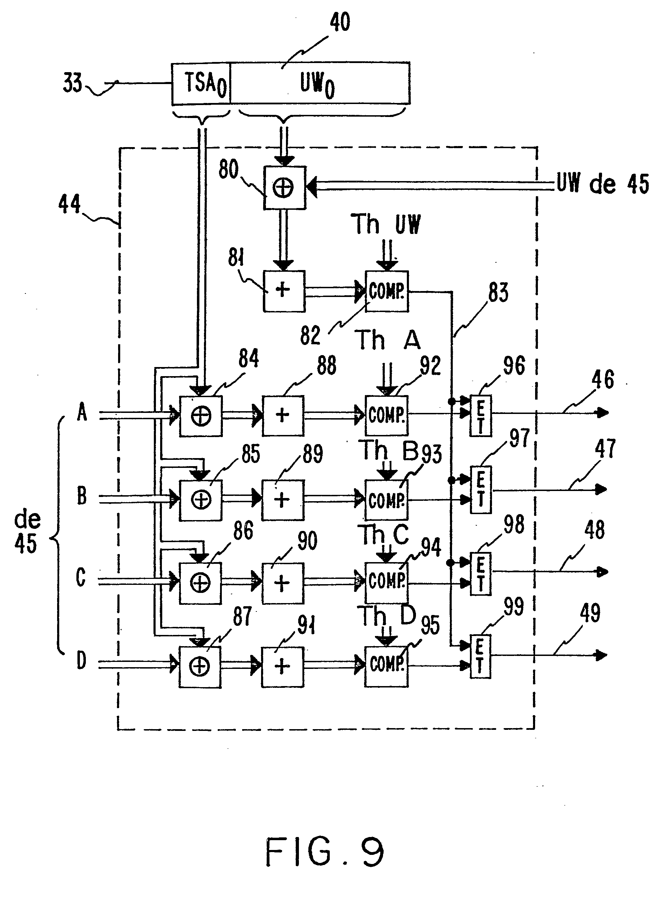

On a représenté sur la figure 8 un exemple de réalisation du multiplexeur de réseau 22 illustré sous forme de bloc sur la figure 3. Le multiplexeur de réseau 22 comprend un registre à décalage 40 dont l'entrée est reliée par la ligne 33 à la sortie du démodulateur DEM du modem 25 (figure 3). Le chargement du registre à décalage 40 est autorisé par un signal sur une ligne 41 fourni par un circuit monostable 42. Le circuit monostable 42 est enclenché par un signal reçu du détecteur de porteuse du démodulateur DEM sur une ligne 3. Les bits emmagasinés dans le registre à décalage 40 sont appliqués en parallèle à une dispositif de reconnaissance de mot unique et d'adresse 44 qui reçoit aussi des entrées d'une mémoire 45. Le dispositif 44 sera décrit en détail en référence à la figure 9. Le dispositif 44 a quatre sorties reliées respectivement par des lignes 46, 47, 48 et 49 à l'entrée de quatre temporisateurs TM1, TM2, TM3 et TM4. Les sorties des quatre temporisateurs TM1—TM4 sont reliées aux entrées d'une porte OU 50 dont la sortie commande une bascule à verrouillage d'émission (L) 51. La sortie de la bascule d'émission 51 est appliquée à une entrée d'une porte OU 52 dont la sortie est appliquée en parallèle à un temporisateur de préambule 53, à un temporisateur de paquet 54, et à une logique de commutation 55. La sortie du temporisateur de préambule 53 est reliée à l'entrée d'un temporisateur UW—TSA 56 et à travers un inverseur 57 à une entrée d'une porte ET 58 dont une autre entrée reçoit le signal "Demande pour émettre" (RTS) fourni par le contrôleur 21. La porte ET 58 reçoit en outre comme entrées la sortie du temporisateur 54, et la sortie du temporisateur 56 inversée par un inverseur 59. La sortie de la porte ET 58 fournit le signal "Prêt à émettre" (CTS) à destination du contrôleur 21.

La sortie du temporisateur de paquet 54 est appliquée en parallèle à la logique 55 et à un temporisateur de temps de garde 60 dont la sortie est reliée à la logique 55. La logique 55 a deux sorties F1 et F2 qui commandent respectivement les commutateurs 26 et 27 (figure 3) et une sortie reliée par une ligne 61 au temporisateur de paquet 54 et à l'autre entrée de la porte OU 52.

Les quatre sorties du dispositif de reconnaissance 44 sont en outre reliées aux entrées d'une porte OU 62 dont la sortie est reliée à une entrée d'une porte ET 63. L'autre entrée de la porte ET 63 est reliée à la ligne 33 par une ligne 64. La sortie de la porte ET 63 est reliée à l'entrée du contrôleur 21 par la ligne 34.

La sortie du contrôleur 21 est reliée par la ligne 23 à une entrée d'une porte ET 65 dont l'autre entrée est reliée à la sortie de la porte ET 58 par une ligne 66. La sortie de la porte ET 65 est reliée à une entrée d'une porte OU 67 dont la sortie est reliée à l'entrée du modulateur MOD du modem 25 par la ligne 24. L'autre entrée de la porte OU 67 est reliée à la sortie d'une porte ET 68 dont une entrée est reliée à la sortie d'un registre à décalage 69 qui est chargé en parallèle avec des données stockées dans le mémoire 45. Le chargement et le décalage du registre à décalage 69 est autorisé par le signal de sortie du temporisateur UW—TSA 56, qui lui est appliqué par une ligne 70. La ligne 70 est en outre reliée à l'autre entrée de la porte ET 68. Le décalage du registre à décalage 69 est commandé par des impulsions d'horloge d'émission H2 fournies par le contrôleur 21.

Chacun des temporisateurs que comprend le multiplexeur de réseau 22 est constitué de façon connue par un compteur dégressif qui est pré-établi à une compte donné et qui, lorsqu'il est initié, décompte jusqu'à zéro sous la commande d'impulsions d'horloge. Les temporisateurs définissent un intervalle de temps prédéterminé entre l'instant où il est initié et l'instant où ill atteint le compte zéro. Le temporisateur de paquet 54 a la particularité de pouvoir définir deux intervalles de temps différents. Le compteur qui le constitue est sélectivement bouclé sur lui-même sous la commande d'un signal fourni par la logique 55 sur la ligne 61. Lorsque la boucle est fermée, le temporisateur définit un intervalle de temps correspondant à la durée d'un paquet double alors que lorsque la boucle est ouverte, il définit un intervalle de temps correspondant à la durée d'un paquet simple.

On décrira maintenant le fonctionnement du dispositif illustré sur la figure 8. Pour plus de clarté de la description qui suit, on suppose que le multiplexeur de réseau illustré sur la figure 8 est celui de la station D. Lorsque le démodulateur DEM du modem 25 (figure 3) détecte la fréquence descendante $f'_2$, il en informe le multiplexeur de réseau en générant un signal "Signal détecté" qui est appliqué par la ligne 43 au circuit monostable 42. En réponse au "signal détecté", le circuit monostable 42 génère une impulsion d'une durée sensiblement égale à la somme des durées du préambule SYNC, du mot unique UW, et de l'adresse de la station émettrice TSA. Cette impulsion est appliquée au registre à décalage 40 par la ligne 41. La longueur du registre à décalage 40 est égale à la somme des longueurs du mot unique UW et de l'adresse de la station émettrice. Par exemple, dans un réseau où le mot unique UW a une longueur de 19 bits et l'adresse de la station émettrice a une longueur de 7 bits, le registre à décalage 40 aura une longueur de 26 bits.

Tant que l'impulsion fournie par le circuit monostable 42 existe, les bits fournis par la sortie du démodulateur DEM sont chargés et décalés dans le registre à décalage 40 sous la commande d'impulsions d'horloge de réception H1 fournies par le démodulateur DEM. Les bits emmagasinés dans le registre à décalage 40 sont appliqués en parallèle au dispositif de reconnaissance de mot unique et d'adresse 44. La fonction du dispositif 44 est de détecter si un mot unique UW est reçu, et si c'est le cas l'adresse de la station émettrice qui le suit. Pour cela le dispositif 44 reçoit aussi comme entrées des répliques du mot unique UW et des différentes adresses des stations du réseau, stockées dans la mémoire 45.

Lorsque le dispositif 44 détecte un mot unique UW suivi de l'adresse de la station A, il génère sur la ligne 46 un signal "Station A détectée" qui initie le temporisateur TM1 associé à la station A. De façon semblable les temporisateurs TM2, TM3 et TM4 sont initiés respectivement par des signaux "Station B détectée", "Station C détectée", et "Station D détectée" fournis par le dispositif 44 sur les lignes 47 à 49. Les temporisateurs TM1 à TM4 définissent respectivement les intervalles de temps TA, TB, TC et TD décrits en référence à la figure 7.

Le premier des temporisateurs TM1 à TM4 qui atteint son compte zéro, enclenche la bascule d'émission 51 à travers la porte OU 50 à l'instant où il atteint ce compte zéro. L'instant d'enclenchement de la bascule d'émission 51 définit l'instant de début d'émission par la station D.

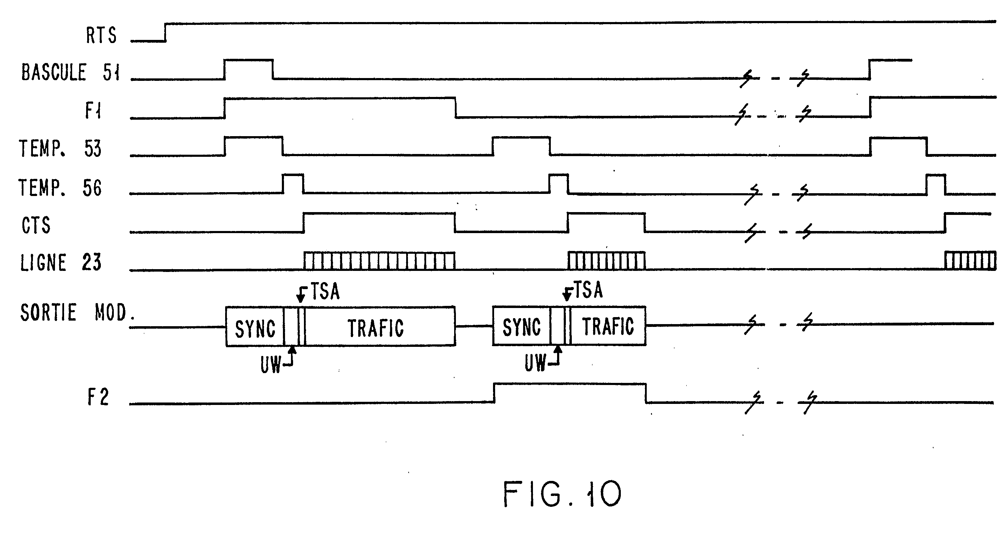

Pour une meilleure compréhension du processus d'émission on se référere utilement au diagramme des temps illustré sur la figure 10. On suppose que le signal "Demande pour émettre" (RTS) fourni par le contrôleur 21 est au niveau haut. L'enclenchement de la bascule d'émission 51 se traduit par l'apparition d'une impulsion de départ à la sortie de la porte OU 52. Le front avant de l'impulsion de départ excite la logique 55 qui met a un niveau haut sa sortie F1 qui ferme l'interrupteur 26 (figure 2) et conditionne ainsi la station pour une émission sur la fréquence montante $f_1$. Le niveau haut sur la sortie F1 est aussi détecté par le modem 25 qui commence à générer et émettre le préambule de synchronisation SYNC de façon connue dans l'art. Le front avant de l'impulsion de départ initie le temporisateur de paquet 54 dont la sortie commande la logique 55 de façon à maintenir la sortie F1 à un niveau haut pendant la durée d'un paquet double. Le front avant de l'impulsion de départ initie en outre le temporisateur de préambule 53 qui définit un intervalle de temps égal à la durée du préambule SYNC. Pendant la durée du préambule SYNC, celui-ci est émis par le modem 25. A la fin du préambule SYNC, le temporisateur de préambule initie le temporisateur de mot unique et d'adresse 56 qui génère une impulsion dont la durée est égale à la durée du mot unique UW augmentée de la durée de l'adresse de la station émettrice. L'impulsion fournie par le temporisateur 56 est appliquée par la ligne 70 au registre à décalage 69 et autorise le chargement en parallèle dans le registre à décalage 69 du mot unique UW et de l'adresse de la station D emmagasinés dans la mémoire 45. Le mot unique UW et l'adresse de la station D sont ensuite transférés bit par bit vers le modem 25 à travers la porte ET 68 la porte OU 67 et la ligne 24. A la fin de l'impulsion fournie par le temporisateur 56 la porte ET 68 est rendue non conductrice, et la porte ET 58 est rendue conductrice générant le signal "Prêt à émettre" (CTS) à destination du contrôleur 21. En réponse au signal "Prêt à émettre", le contrôleur 21 place sur la ligne 23 les données de trafic qui sont appliquées au modem 25 à travers les portes 65 et 67 et la ligne 24.

A la fin de la durée du paquet double déterminée par le temporisateur de paquet 54, la porte ET 58 est rendue non conductrice, ce qui supprime le signal "Prêt à émettre", et le temporisateur de temps de garde 60 est initié forçant à zéro les deux sorties F1 et F2 de la logique 55, qui ouvrent les deux interrupteurs 26 et 27 (figure 3) pendant la durée du temps de garde.

A la fin du temps de garde, la logique 55 met à un niveau haut sa sortie F2 qui ferme l'interrupteur 27 (figure 3) et conditionne ainsi la station pour émittre sur la fréquence montante $f_2$. La logique 55 génère sur la ligne 61 une impulsion qui traverse la porte OU 52 et est appliquée comme impulsion de départ aux temporisateurs 53 et 54. L'impulsion sur la ligne 61 conditionne aussi le temporisateur de paquet 54 de façon à ce qu'il définisse la durée d'un paquet simple. La génération du paquet simple commence alors de façon semblable à celle du paquet double.

A la fin de la durée du paquet simple, la logique 55 force à zéro ses sorties F1 et F2 et restaure les temporisateurs. Le système se met alors en attente d'un nouveau "signal détecté" sur la ligne 43.

Comme décrit plus haut, c'est le signal fourni par celui des temporisateurs TM1—TM4 qui atteint le compte zéro le premier qui enclenche la bascule d'émission 51 et initie le début d'émission par la station. On notera que les signaux fournis par les autres temporisateurs peuvent être utilisés pour la vérification de la synchronisation du réseau.

Jusqu'ici on a décrit comment le dispositif illustré sur la figure 8 synchronisait l'émission de la station, on décrira maintenant brièvement comment il transfère les paquets reçus vers le contrôleur 21. Les bits reçus du démodulateur DEM sont appliqués par les lignes 33 et 64 à une entrée de la porte ET 63. Dès que les dispositif de reconnaissance 44 détecte un mon unique UW suivi d'une adresse de station émettrice, il fournit un signal sur l'une des lignes 46 à 49 comme décrit plus haut. Ce signal traverse la porte OU 62 et rend conductrice la porte ET 63 permettant ainsi aux données de trafic qui suivent l'adresse de la station émettrice détectée, d'être transférées au contrôleur 21 à travers la ligne 64, la porte ET 63 et la ligne 34. On notera que le multiplexeur de réseau ne gère que la synchronisation du réseau et qui les adresses des stations destinatrices ainsi que l'ensemble des données de trafic sont gérés par le contrôleur de communication 21.

On a représenté sur la figure 9 un exemple de réalisation du dispositif de reconnaissance de mot unique et d'adresse 44. On supposera que le mot unique UW comprend dix neuf bits et l'adresse TSA sept bits. Les dix neuf derniers bit stockés dans le registre à décalage 40 et qui constituent on mot que l'on désignera $UW_o$ sont appliqués en parallèle à un emsemble de dix neuf circuits OU Exclusif inverseurs 80 qui reçoit aussi les dix neuf bits du mot unique UW stocké dans la mémoire 45. Chacun des circuits OU Exclusif inverseurs a ses deux entrées reliées respectivement aux bits de même poids dans les mots $UW_o$, et UW et fournit à sa sortie un "1" si ces bits sont indentiques. Les sorties des circuits OU Exclusif inverseurs de l'ensemble 80 sont appliqués à un additionneur 81 qui fait la somme des "1" en sortie des circuits de l'ensemble 80. Ainsi si le mot $UW_o$ et la réplique UW sont identiques l'additionneur 81 fournira à sa sortie la valeur 19 codée en binaire. Pour détecter un mot unique on n'exige pas que la sortie de l'additionneur 81 fournisse la valeur 19 mais on fixe un seuil de détection noté Th UW qu'on choisira par exemple égal à 17. La sortie de l'additionneur 81 est comparée au seuil Th UW dans un comparateur 82 dont la sortie fournira sur une ligne 83 un niveau haut indicatif d'un UW détecté si la sortie de l'additionneur 81 est supérieure ou égale au seuil Th UW.

L'adresse de la station émettrice est détectée de façon semblable. Les sept premiers bits stockés dans le registre à décalage 40 et que l'on désignera par $TSA_o$ sont appliqués en parallèle à quatre ensembles de sept circuits OU Exclusif inverseurs 84, 85, 86 et 87. Les ensembles 84 à 87 reçoivent aussi respectivement comme entrées les adresses des stations A, B, C et D stockées dans la mémoire 45. Le fonctionnement des ensembles 84 à 87 est identique à celui de l'ensemble 80. Les sorties des ensembles 84 à 87 sont appliquées respectivement à quatre additionneurs 88, 89, 90 et 91 semblables à l'additionneur 81. Les sorties des additionneurs 88 à 91 sont comparées respectivement avec des seuils de détection Th A, Th B, Th C et Th D dans des comparateurs 92 à 95 dont les sorties sont reliées respectivement à une entrée de quatre portes ET 96 à 99. L'autre entrée des portes ET 96 à 99 est reliée à la sortie du comparateur 82 par la ligne 83. Les sorties des portes ET 96 à 99 sont reliées respectivement aux lignes 46 à 49 (figure 8). Si la sortie de la'additionneur 88 est supérieure ou égale au seuil de détection Th A de l'adresse de la station A, la sortie du comparateur 92 est à un niveau haut, mais ce niveau haut ne généra un signal "Station A détectée" sur la ligne 46 qui si un mot unique UW a été détecté, c'est-à-dire que si un niveau haut est présent à la sortie du comparateur 82. Les signaux "Station B détectée", "Station C détectée" et "Station D détectée" sont obtenus de façon semblable sur les lignes 47 à 49 à la sortie des portes ET 97 à 99 respectivement.

Jusqu'ici on a décrit le procédé de l'invention appliqué à un réseau comprenant quatre stations réparties sur deux zones géographiques distinctes, mais l'homme de l'art comprendra que le procédé de l'invention peut être étendu à plusieurs stations réparties entre plusieurs zones géographiques distinctes.

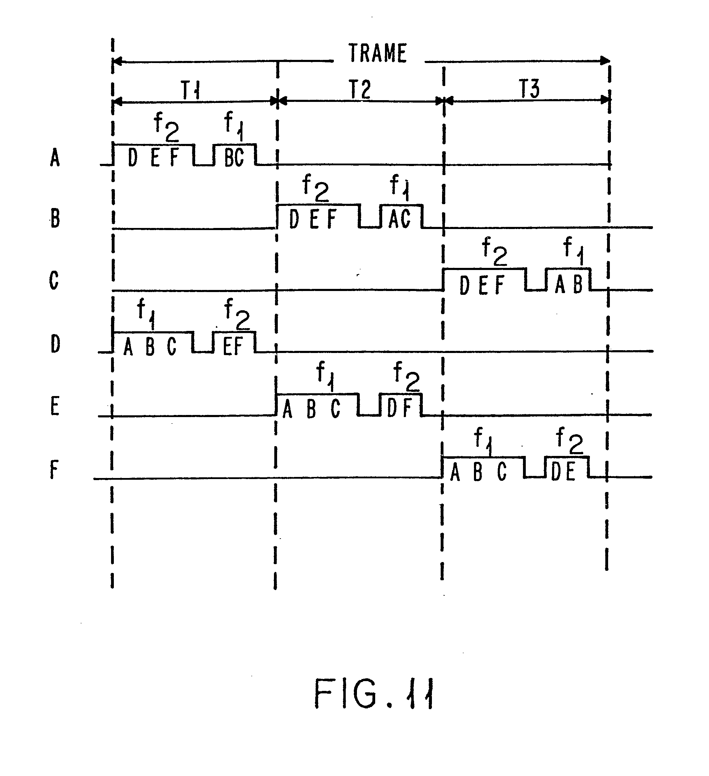

On décrira brièvement le procédé dans le cas où le réseau comprend six stations également réparties entre deux zones distinctes en se référant au schéma illustré sur la figure 11. Trois stations A, B et C sont situées dans une première zone qui ne peut recevoir que la fréquence descendante $f_1'$ associée à la fréquence montante $f_1$ et trois stations D, E, F sont situées dans une seconde zone qui ne peut recevoir que la fréquence descendante $f_2'$ associée à la fréquence montante $f_2$. La trame est divisée en trois intervalles égaux T1, T2 et T3. Pendant l'intervalle T1, la station A émet un paquet triple à destination des stations D, E, F sur la fréquence montante $f_2$, suivi après un temps de garde d'un paquet double à destination des stations B et C sur la fréquence montante $f_1$. Simultanément, la station D émet un paquet triple à destination des stations A, B, C sur la fréquence montante $f_1$, suivie après en temps de garde d'un paquet double à destination des stations E et F sur la fréquence montante $f_2$. Les autres stations sont silencieuses. Pendant l'intervalle T2, ce sont les stations B et E qui émettent comme illustré sur la figure 11. Pendant l'intervalle T3 ce sont les stations C et F qui émettent.

Le paquet triple est composé de façon semblable au paquet double. Il comprend un préambule, l'adresse de la station émettrice, puis les données de trafic.

Chaque station peut émettre sélectivement sur les deux fréquences montantes $f_1$ et $f_2$ mais ne peut recevoir qu'une seule fréquence descendante. La synchronisation de l'émission des paquets par une station est obtenue de façon semblable, si ce 'nest que chaque station comprendra six temporisateurs TM1 à TM6 associés respectivement aux stations A et F. Chaque temporisateur définit l'intervalle de temps entre l'instant où l'adresse de la station émettrice est détectée et l'instant où la station réceptrice doit commencer l'emission de ses paquets.

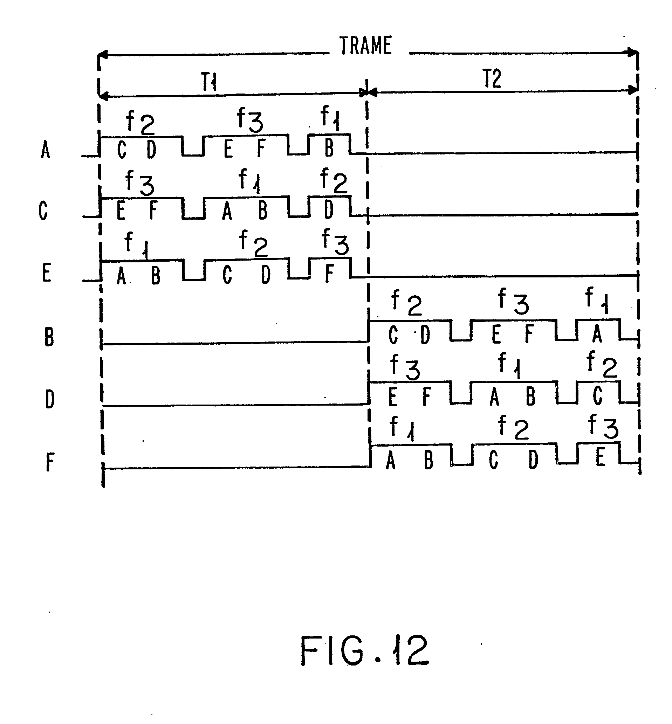

On décrira enfin brièvement le procédé de l'invention dans le cas où le réseau comprend six stations A—F réparties également en trois zones distinctes en se référant au schéma de la figure 12. Les stations A et B sont situées dans une première zone qui ne reçoit que la fréquence descendante $f_1'$ qui correspond à la fréquence montante $f_1$; les stations C et D sont situées dans une second zone qui ne reçoit que la fréquence descendante $f_2'$ correspondant à la fréquence montante $f_2$; les stations E et F sont situées dans une troisième zone qui ne reçoit que la fréquence descendante $f_3'$ correspondant à la fréquence montante $f_3$.

La trame est divisée en deux intervalles de temps égaux T1 et T2. Pendant l'intervalle T1, la station A émet un paquet double à destination des stations C et D sur la fréquence montante $f_2$, puis un paquet double à destination des stations E et F sur la fréquence montante $f_3$, et enfin un paquet' simple à destination de la station B sur la fréquence montante $f_1$. Simultanément, la station C émet un paquet double à destination des stations E et F sur la fréquence montante $f_3$, puis un paquet double à destination des stations A et B sur la fréquence montante $f_1$ et enfin un paquet simple à destination de la station D sur la fréquence montante $f_2$. Toujours pendant l'intervalle T1, la station E émet un paquet double à destination des stations A et B sur la fréquence montante $f_1$, puis un paquet double à destination des stations C et D sur la fréquence montante $f_2$ et enfin un paquet simple à destination de la station F sur la fréquence montante $f_3$. Les autres stations sont silencieuses pendant l'intervalle T1.

Pendant l'intervalle T2 se sont les stations B, D et F qui émettront simultanement et les stations A, C et E qui resteront silencieuses, comme illustré sur la figure 12.

Chaque station peut émettre sélectivement sur les trois fréquences montantes $f_1$, $f_2$ et $f_3$ mais ne peut recevoir qu'une seule fréquence descendante. Chaque station comprend six temporisateurs associés respectivement aux six stations A et F, et chaque temporisateur définit l'intervalle de temps entre l'instant où l'addresse de la station à laquelle il est associé est détectée et l'instant où la station réceptrice doit commencer l'émission de ses paquets.

A partir des exemples illustrés sur les figures 4, 11 et 12, l'homme de l'art comprendra aisément comment appliquer le procédé de l'invention dans le cas de N stations réparties en M zones distinctes. Chaque station doit pouvoir émettre sélectivement sur M fréquences montantes, chacune d'elle étant associée à une des M zones. Chaque station comprendra N temporisateurs. La composition de la trame sera de préférence et pour une meilleure efficacité du système la suivante: Si N' est le plus grand nombre de stations dans une zone, on divisera la trame en N' intervalles égaux et au plus M stations, au plus une dans chaque zone, émetteront simultanement pendant chacun des intervalles.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

## Revendications

1. Procédé de synchronisation d'un réseau de communication par satellite dans lequel N stations (A—D) réparties en M zones distinctes (Zones 1 et 2) couvertes respectivement par M fréquences descendantes différentes ($f'_1$, $f'_2$) échangent des paquets d'impulsions, chacun d'eux comprenant successivement un préambule (SYNC), un mot unique (UW), l'adresse de la station émettrice (TSA), et des données de trafic, au moyen d'un satellite qui comprend une antenne de réception à faisceau global (ANR) qui couvre l'ensemble de M zones et qui est adaptée pour recevoir M fréquences montantes différentes ($f_1$, $f_2$) des moyens (TR1, TR2) pour transférer respectivement les M fréquences montantes en M fréquences descendantes différentes correspondantes, et M antennes d'émission (ANT1, ANT2) à faisceau directif qui couvrent respectivement les M zones, chacune de ces M antennes étant adaptée pour émettre la fréquence descendante qui est associée à la zone qu'elle couvre, caractérisé en ce que:
chaque station reçoit la fréquence descendante associée à la zone dans laquelle elle est située et détecte si elle reçoit un mot unique suivi d'une adresse de station.
chaque station détermine un instant de début d'émission qui est situé dans le temps, un intervalle de temps prédéterminé (TA—TD) après qu'elle ait détecté un mot unique suivi d'une adresse de station, cet intervalle de temps étant fonction de la station dont l'adresse a été détectée, et
chaque station émet successivement à partir de cet instant de début d'émission M paquets à destination respective des M zones pendant des intervalles de temps prédéterminés dans la trame, ces M paquets étant émis sur des fréquences montantes différentes de telle sorte que le paquet à destination d'une zone donnée soit émis sur la fréquence montante qui correspond à la fréquence descendante à destination de cette zone.

2. Procédé selon la revendication 1, caractérisé en ce que, N' étant le plus grand nombre de stations dans une zone, la trame est divisée en N' intervalles de temps égaux et, au plus M stations, au plus une station par zone, émettent simultanément pendant un de ces intervalles de temps, les autres stations restant silencieuses.

3. Système pour la mise en oeuvre du procédé selon l'une quelconque des revendications 1 et 2, caractérisé en ce que chaque station comprend:
des moyens (25, 30—33) pour recevoir la fréquence descendante associée à la zone dans laquelle est située la station;
des moyens de détection (40—45) pour détecter si un mot unique suivi d'une adresse de station est reçu;
des moyens de temporisation (50, TM1—TM4) pour déterminer un instant de début d'émission qui est situé dans le temps un intervalle de temps prédéterminé (TA—TD) après que lesdits moyens de détection aient détecté un mot unique suivi d'une adresse de station, cet intervalle de temps étant fonction de la station dont l'adresse a été détectée, et
des moyens (25, 30, 31, 52—61, 65—70) pour émettre successivement à partir de cet instant de début d'émission M paquets à destination respective des M zones pendant des intervalles de temps prédéterminés, dans la trame, ces M paquets étant émis sur des fréquences montantes différentes de telle sorte que le paquet à destination d'une zone donnée soit émis sur la fréquence montante qui correspond à la fréquence descendante à destination de cette zone.

4. Système selon la revendication 3, et dans lequel chaque station comprend un équipment hautes fréquences (30) adapté pour émettre sélectivement les M fréquences montantes et pour recevoir la fréquence descendante associée à la zone dans laquelle elle se situe, un modem (25) ayant l'entrée du démodulateur connectée à la sortie de l'équipement hautes fréquences et la sortie du modulateur connectée á l'entrée de l'équipement hautes fréquences, et un contrôleur de communication (21), caractérisé en ce que chaque station comprend:
des moyens de génération (25, 45, 69) pour générer le mot unique suivi de l'adresse de la station,
des moyens (53, 54, 56—59, 65—70) pour former successivement à partir dudit instant de début d'émission M paquets à destination respective des M zones pendant des intervalles de temps prédéterminés dans la trame, chaque paquet comprenant le mot unique suivi de l'adresse de la station générés par lesdits moyens de génération et des données fournies par le contrôleur de communication, et
des moyens (55) pour commander sélectivement l'équipement hautes fréquences de telle sorte que les M paquets soient émis sur des fréquences montantes différentes, le paquet à destination d'une zone donnée étant émis sur la fréquence montante qui correspond à la fréquence descendante à destination de cette zone.

5. Système selon l'une quelconque des revendications 3 et 4 caractérisé en ce que lesdits moyens de temporisation comprennent:

N temporisateurs (TM1—TM4), chacun d'eux définissant un intervalle de temps prédéterminé (TA—TD) et étant associé à une des N stations, le temporisateur associé à une station donnée étant initié par la détection par lesdits moyens de détection de l'adresse de cette station, et

des moyens (50) pour fournir ledit instant de début d'émission à la fin de celui des intervalles de temps fournis par les N temporisateurs qui se termine le premier.

## Patentansprüche

1. Verfahren zur Synchronisation eines mit einem Satelliten ausgerüsteten Übertragungsnetzwerkes, in dem N Stationen (A—D)—über M verschiedene Zonen (Zonen 1 und 2) verteilt, die von M verschiedenen abfallenden Frequenzen ($f'_1$, $f'_2$) erfaßt werden—Pulsbündel austauschen, die jeweils aufeinanderfolgend eine Präambel (SYNC), ein eindeutiges Wort (UW), die Adresse der Sendestation (TSA) und Verkehrsdaten enthalten, wobei der Austausch über einen Satelliten erfolgt, der einschließt:

eine Empfangsantenne mit einem Global-Strahlungsdiagramm (ANR), die die gesamten M Zonen erfaßt und zum Empfang von M verschiedenen ansteigenden Frequenzen (f1, f2) ausgelegt ist, Mittel (TR1, TR2) zum Umsetzen der M ansteigenden Frequenzen in die entsprechenden M abfallenden Frequenzen, und M bündelnde Sendeantennen (ANT1, ANT2) zum Erfassen der jeweiligen M Zonen, wobei eine jede der M Antennen so ausgelegt ist, daß sie die abfallende Frequenz sendet, die der von ihr erfaßten Zone zugeordnet ist, dadurch gekennzeichnet, daß jede Station die abfallende Frequenz empfängt, die der Zone zugeordnet ist in der die Station liegt, und feststellt, ob sie ein eindeutiges, von einer Stationsadresse gefolgtes Wort empfängt,

daß jede Station eine Sendebeginnzeit bestimmt, definiert durch das Ende eines vorbestimmten Zeitintervalls (TA—TD), nachdem sie ein eindeutiges, von einer Stationsadresse gefolgtes Wort erkannt hat, wobei das Zeitintervall von der Station abhängt, deren Adresse erkannt wurde, und daß

jede Station von dieser Sendebeginnzeit an nacheinander die für die jeweiligen M Zonen bestimmten M Bündel während der im Rahmen vorbestimmten Zeitintervalle sendet, wobei diese M Bündel auf verschiedenen ansteigenden Frequenzen so gesendet werden, daß das für eine bestimmte Zone vorgesehene Bündel auf derjenigen ansteigenden Frequenz gesendet wird, die der für diese Zone bestimmten abfallenden Frequenz entspricht.

2. Verfahren nach Anspruch 1, dadurch gekennzeichnet, daß, wenn N' die größte Anzahl von Stationen in einer Zone darstellt, der Rahmen in N' gleiche Zeitintervalle unterteilt ist, und daß höchstens M Stationen, das heißt höchstens eine Station pro Zone, gleichzeitig während eines dieser Zeitintervalle senden, während die restlichen Stationen im Ruhezustand sind.

3. System zur Durchführung des Verfahrens nach einem der Ansprüche 1 und 2, dadurch gekennzeichnet, daß jede Station einschließt:

Mittel (25, 30—33) zum Empfang der abfallenden Frequenz, die der Zone zugeordnet ist, in welcher die Station liegt,

Erkennungsmittel (40—45) um festzustellen, ob ein eindeutiges, von einer Stationsadresse gefolgtes Wort empfangen wird,

Zeitgebermittel (50, TM1—TM4) zum Feststellen einer Sendebeginnzeit, definiert durch das Ende eines vorbestimmten Zeitintervalls (TA—TD) nachdem die Zeitgebermittel ein eindeutiges, von einer Stationsadresse gefolgtes Wort erkannt haben, wobei dieses Zeitintervall von der Station abhängt, deren Adresse erkannt wurde, und

Mittel (25, 30, 31, 5261, 6570), um von dieser Sendebeginnzeit ab nacheinander M jeweils den M Zonen bestimmte Bündel während der im Rahmen vorbestimmten Zeitintervalle zu senden, wobei die M Bündel auf verschiedenen ansteigenden Frequenzen so gesendet werden, daß das für eine bestimmte Zone vorgesehene Bündel auf derjenigen ansteigenden Frequenz gesendet wird, die der für diese Zone bestimmten abfallenden Frequenz entspricht.

4. System nach Anspruch 3, in welchem jede Station einschließt:

ein Hochfrequenzgerät (30), das so ausgelegt ist, daß es die M ansteigenden Frequenzen selektiv überträgt und das die der Zone zugeordnete Frequenz empfängt in der die Station liegt, wobei ein Modem (25) mit dem Eingang des Demodulators an den Ausgang des Hochfrequenzgerätes und mit dem Ausgang des Modulators an den Eingang des Hochfrequenzgerätes angeschlossen ist, und eine DFV-Steuereinheit (21), dadurch gekennzeichnet, daß jede Station einschließt:

Generierungsmittel (25, 45, 69) zum Generieren des eindeutigen, von der Stationsadresse gefolgten Wortes,

Mittel (53, 54, 56—59, 65—70) zum aufeinanderfolgenden Bilden ab der Sendebeginnzeit der jeweils für die M Zonen bestimmten M Bündeln während der im Rahmen vorbestimmten Zeitintervalle, wobei jedes Bündel das eindeutige, von der Stationsadresse gefolgte und von den Generierungsmitteln generierte Wort, sowie von der DFV-Steuereinheit gelieferte Daten enthält, und

Mittel (55) zum selektiven Steuern des Hochfrequenzgerätes, so daß die M Bündel auf verschiedenen ansteigenden Frequenzen übertragen werden, wobei das für eine bestimmte Zone vorgesehene Bündel auf derjenigen ansteigenden Frequenz übertragen wird, die der für diese Zone bestimmten ansteigenden Frequenz entspricht.

5. System nach einem der Ansprüche 3 und 4, dadurch gekennzeichnet, daß die Zeitgebermittel einschließen:

N Zeitgeber (TM1—TM4), von denen ein jeder ein vorbestimmtes Zeitintervall (TA—TD) definiert und einer der N Stationen zugeordnet ist, wobei der einer bestimmten Station zugeordnete Zeitgeber dadurch angeregt wird, daß die Erkennungsmittel die Adresse dieser Station erkennen, und

Mittel (50) zum Anzeigen der Sendebeginnzeit am Ende des ersten der Zeitintervalle, die von den N Zeitgebern bereitgestellt werden.

## Claims

1. A method for synchronizing a satellite communication network wherein N stations (A—D) distributed over M separate zones (zones 1 and 2) respectively covered by M different down-link frequencies ($f'_1$, $f'_2$) exchange, by means of a satellite, pulse bursts, each one comprising successively a preamble (SYNC), a unique word (UW), the address of the transmitting station (TSA) and traffic data, the satellite including a global beam receiver antenna (ANR) covering all of the M zones and designed for receiving M different up-link frequencies ($f_1$, $f_2$), means (TR1, TR2) for respectively converting the M up-link frequencies to the different corresponding down-link frequencies, and M directional beam transmitter antennas (ANT1, ANT2) respectively covering the M zones, each of the M antennas being designed for transmitting the down-link frequency associated with the zone it covers, characterized in that:

each station receives the down-link frequency associated with the zone in which it is located and detects the reception of a unique word followed by a station address,

each station determines a transmission start-up time defined by the end of a predetermined time interval (TA—TD) after the detection of a unique word followed by a station address, said time interval depending upon the station whose address has been detected, and

each station successively transmits, from said transmission start-up time onwards, M bursts respectively intended for the M zones during predetermined time intervals within the frame, said M bursts being transmitted at different up-link frequencies so that the burst intended for a given zone is transmitted at the up-link frequency corresponding to the down-link frequency intended for that zone.

2. A method according to claim 1, characterized in that, N' being the largest number of stations in a zone, the frame is divided into N' equal time intervals, and a maximum of M stations—at most one station per zone—transmit simultaneously during one of said time intervals, the remaining stations remaining quiescent.

3. A system for implementing the method according to any one of claims 1 and 2, characterized in that each station comprises:

means (25, 30—33) for receiving the down-link frequency associated with the zone in which the station is located,

detection means (40—45) for detecting whether a unique word followed by a station address has been received,

timing means (50, TM1—TM4) for determining a transmission start-up time defined by the end of a predetermined time interval (TA—TD) after said detection means have detected a unique word followed by a station address, said time interval depending upon the station whose address has been detected, and

means (25, 30, 31, 52—61, 65—70) for successively transmitting, from said transmission start-up time onwards, M bursts respectively intended for said M zones during predetermined time intervals within said frame, said M bursts being transmitted at different up-link frequencies so that the burst intended for a given zone is transmitted at the up-link frequency corresponding to the down-link frequency intended for that zone.

4. A system according to claim 3, wherein each station comprises a high frequency device (30) designed for selectively transmitting the M up-link frequencies and for receiving the down-link frequency associated with the zone in which it is located, a modem (25) whose demodulator input is connected to the output of the high frequency device and whose modulator output is connected to the input of the high frequency device, and a communication controller (21), characterized in that each station comprises:

generation means (25, 45, 69) for generating the unique word followed by the station address,

means (53, 54, 56—59, 65—70) for successively forming, from said start-up transmission time onwards, M bursts respectively intended for the M zones during predetermined time intervals in the frame, each burst comprising the unique word followed by the station address generated by said generation means and the data supplied by the communication controller, and

means (55) for selectively controlling the high frequency device in such a way that the M bursts are transmitted at different up-link frequencies, the burst intended for a given zone being transmitted at the up-link frequency corresponding to the down-link frequency intended for said zone.

5. A system according to any one of claims 3 and 4, characterized in that said timing means include:

N timers (TM1—TM4), each one defining a predetermined time interval (TA—TD) and being associated with one of the N stations, the timer associated with a given station being initiated when said detection means detect the address of that station, and

means (50) for providing said transmission start-up time at the end of the first one of the time intervals defined by the N timers.

FIG. 1

FIG. 2

FIG.3

FIG.4

FIG. 5

FIG. 6

FIG.7

FIG. 8

FIG. 9

FIG. 10

FIG. 11

FIG. 12